# FASCICULE DE BREVET EUROPEEN

(11) **EP 3 271 214 B1**
(45) Date de publication et mention de la délivrance du brevet: **01.05.2019**
(21) Numéro de dépôt: 16714997.0
(22) Date de dépôt: 03.03.2016
(51) Int. Cl.: B60R 9/045

(54) **GALERIE SÉCURISÉE POUR TOIT DE VÉHICULE AUTOMOBILE**
DACHTRÄGER FÜR EIN KRAFTFAHRZEUG
ROOF RACK FOR A MOTOR VEHICLE

(30) Priorité: 20.03.2015 FR 1552305
(43) Date de publication de la demande: 24.01.2018
(73) Titulaire: PSA AUTOMOBILES S.A., 78300 Poissy (FR)
(72) Inventeur: MAINGRET, Denis, 70300 Brotte Les Luxeuil (FR)
(86) Numéro de dépôt international: PCT/FR2016/050484
(87) Numéro de publication internationale: WO 2016/151212

(56) Documents cités:
- DE-A1-102011 082 421
- FR-A1- 2 924 653

## Description

### DOMAINE TECHNIQUE

La présente invention se rapporte à une galerie sécurisée pour véhicule automobile et destinée au transport d'un excédant de bagage ou d'un objet de volume conséquent, en particulier de coffres de toit. Ces galeries sont constituées principalement de barres de portage de ces coffres ou autre objet, ces barres étant réalisées en en matériau - en particulier en alliage métallique - suffisamment robuste pour pouvoir résister aux contraintes liées à la vitesse et aux vibrations du véhicule.

Les barres de portage sont disposées transversalement au toit d'un véhicule, c'est-à-dire perpendiculairement à l'axe principal du véhicule (axe longitudinal de déplacement en ligne droite), et couplées à des rails d'accrochage fixés au toit. L'arrimage de chaque barre de portage est généralement réalisé par un serrage réversible de mâchoires sur chaque rail, permettant la pose ou la dépose de cette barre de manière simple et rapide.

### ÉTAT DE LA TECHNIQUE

De nombreuses variantes de mâchoires de fixation de barres de portage ont existé. Dans la période récente, les barres de portage sont fixées, comme illustré par le document de brevet EP0925205, sur les rails d'accrochage du toit par des mâchoires de serrage déplaçables en va-et-vient l'une par rapport à l'autre. Pour guider le déplacement de ces mâchoires, ces mâchoires sont équipées de rampes de glissement pouvant glisser le long d'une surface de guidage fixe. Et pour le serrage des mâchoires sur les rails fixes, des boulons sont prévus à l'intérieur des barres de portage.

Un autre exemple de réalisation est présenté dans le document de brevet EP0852546, comprenant également des mâchoires de serrage pouvant se rapprocher pour fixer une barre de portage sur des rails fixés sur un toit de véhicule. Dans cette réalisation, le moyen de serrage des mâchoires est constitué d'une vis placée au travers de ces mâchoires.

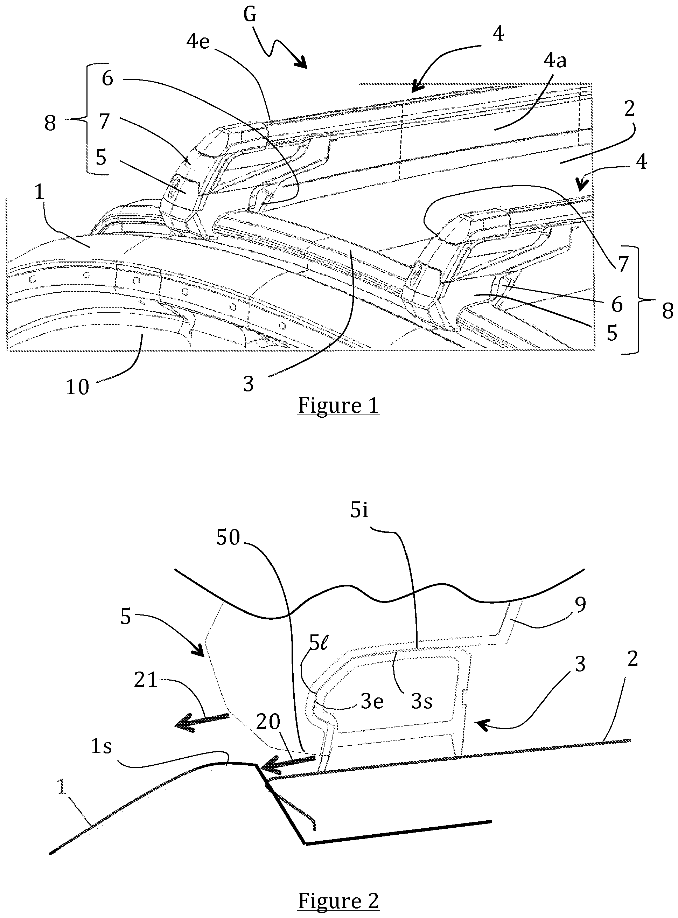

Dans les exemples de réalisation connus, le principe de la fixation des barres sur les rails d'accrochage est illustré par les figures 1 et 2. La figure 1 présente une vue partielle en perspective d'un toit de véhicule, avec un haut de portière 10, une arche de toit 1 bordant ce haut 10 et le toit 2 de ce véhicule. Le toit 2 est équipé de deux rails longitudinaux 3 (un seul rail est visible sur la figure 1), chaque rail d'accrochage 3 courant sensiblement parallèlement et à proximité d'une arche 1. Chaque rail 3 est fixé de manière définitive sur le toit 2.

La galerie « G » comporte deux barres de portage 4 solidarisées à chaque rail d'accrochage 3 de manière réversible par des dispositifs de fixation 8 composés de trois éléments principaux : une mâchoire de serrage externe 5 par rapport à une partie centrale 4a de la barre 4, une mâchoire de serrage interne 6 et un capot 7 de liaison entre lesdites mâchoires. A chacune des extrémités 4e des barres de portage 4, les mâchoires de serrage 5 et 6 enserrent le rail longitudinal 3 correspondant. Chaque capot 7 abrite un moyen de serrage ou de desserrage des deux mâchoires de serrage 5 et 6 sur le rail 3. Ce moyen de serrage, non représenté, comporte une vis de serrage ou équivalent placée à l'intérieur de la barre de portage 4 ou au travers des mâchoires de serrage 5 et 6.

Pour présenter le mouvement de desserrage de la mâchoire externe 5, la figure 2 montre une vue partielle en coupe de cette mâchoire de serrage externe 5 enserrant le rail 3 du toit 2 par ses surfaces d'appui latérale 5ℓ et inférieure 5i contre, respectivement, la face latérale externe 3e et la face supérieure 3s du rail d'accrochage 3. La mâchoire interne n'est pas représentée sur cette figure 2. Au cours du desserrage, la mâchoire 5, entourée d'une semelle 9, se déplace dans le sens des flèches parallèles 20 et 21.

La flèche 20 indique le déplacement de la partie inférieure 50 de la mâchoire de serrage 5 qui vient se placer au plus proche du sommet 1s de l'arche de toit 1 au cours du desserrage lors du retrait de la barre de portage. la partie inférieure 50 de la mâchoire de serrage 5 présente alors un risque élevé de contact par frottement de la partie supérieure 1s de l'arche de toit 1, ce qui va provoquer la formation de rayures visibles. Les mêmes rayures risquent également de se former lors du serrage des mâchoires 5 pendant la phase d'installation des barres de portage.

Cette situation problématique résulte en fait d'un compromis entre les besoins suivants : d'une part les rails longitudinaux 3 qui sont intégrés au toit 2 ne dépassent de ce toit que de manière limitée et, d'autre part, les barres de portage 4 doivent être arrimées sur les rails longitudinaux 3 avec une tenue mécanique assurée.

La face latérale externe 3e du chaque rail 3 présente alors une courbure formant un renflement pour augmenter la prise de contact avec la mâchoire de serrage extérieure 5. Dans ces conditions, la mâchoire de serrage 5 présente un profil complémentaire venant se caler contre le renflement de la face latérale 3e du rail longitudinal 3, ce qui impose à la partie inférieure 50 de la mâchoire de serrage 5 de venir envelopper toute la face latérale externe 3e du rail 3 correspondant.

Dans ces conditions, la partie inférieure enveloppante 50 présente un risque élevé de venir en contact avec l'arche de toit 1 lors des déplacements de la barre 4 pour la pose / dépose de la galerie. Les opérations de pose / dépose de la galerie ne sont donc pas sécurisées au regard des contacts avec le toit. En ce sens, la galerie n'est pas sécurisée.

Ainsi les solutions existantes n'apportent pas de solution au contact des mâchoires avec le toit, en particulier les arches de toi, et donc au risque élevé de formation de rayures que pourrait entraîner les opérations de pose / dépose des barres avant serrage ou après desserrage des mâchoires.

### EXPOSÉ DE L'INVENTION

Afin d'éliminer le risque de rayure d'une arche de toit par contact avec la galerie, risque qui augmente avec le nombre de poses / déposes des barres de portage de la galerie, l'invention propose de sécuriser la galerie par un guidage du déplacement des mâchoires effectué, avant serrage ou après desserrage des barres, à distance de l'arche de toit.

Plus précisément, la présente invention a pour objet une galerie sécurisée pour toit de véhicule automobile connue notamment du document de l'état de la technique DE102011082421 et conforme au préambule de la revendication 1.

Le moyen d'écartement élimine tout risque de contact entre la mâchoire et tout obstacle de toit, en particulier les arches de toit, et donc tout risque de rayure que ladite mâchoire peut provoquer sur le toit.

L'apport de la présente invention par rapport à l'état de la technique fait l'objet de la partie caractérisante de la revendication 1.

Ainsi, le talon d'écartement n'interfère pas dans le contact entre ladite portion et la face supérieure du rail d'accrochage lorsque la mâchoire externe est serrée.

Selon des modes de réalisation préférés, la galerie selon l'invention possède les caractéristiques suivantes :
- le talon d'écartement peut comporter au moins deux protubérances ou, alternativement, former un bourrelet, les protubérances étant agencés en regard l'une de l'autre à l'extrémité interne de la surface d'appui ou, respectivement, le long de cette extrémité interne de la surface d'appui;
- le talon d'écartement est formé d'au moins un épaississement du matériau constituant la mâchoire externe ;
- alternativement, la surface de contact étant recouverte d'une semelle de protection, le talon d'écartement est formé d'au moins un épaississement de cette semelle ;
- le dispositif de serrage / desserrage possédant également une mâchoire de serrage interne par rapport à la partie centrale de la barre de portage, le talon d'écartement coopère avec la mâchoire interne pour le serrage de la barre de portage sur le rail d'accrochage correspondant;

L'invention se rapporte également à un véhicule automobile équipé d'une galerie de toit comportant des barres de portage et des rails d'accrochage fixés au toit, la galerie étant telle que définie ci-dessus.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, une vue partielle en perspective d'un toit de véhicule équipé d'une galerie de toit selon l'état de la technique (commentée ci-dessus);
- la figure 2, une vue partielle en coupe de la mâchoire de serrage externe de la barre de portage de la galerie de l'état de la technique (commentée ci-dessus);
- la figure 3, une vue partielle en coupe d'un exemple de mâchoire de serrage externe comportant un talon composé de deux protubérances selon un exemple de réalisation de barre de galerie selon l'invention;
- la figure 4, une vue en perspective montrant la face inférieure d'appui formant les protubérances de talon de la mâchoire externe de serrage de la figure; et
- la figure 5, une vue partielle en coupe de la mâchoire de serrage externe comportant des protubérances de talon selon un autre exemple de réalisation de l'invention.

### DESCRIPTION DÉTAILLÉE

Dans le présent texte, les qualificatifs « externe » et « interne » se réfèrent à des orientations opposées à et, respectivement, dans la direction de la partie centrale d'une barre de portage. Les qualificatifs « supérieur », « inférieur » se rapportent à une localisation relative d'une partie d'un élément ou d'un élément en position d'utilisation usuelle. De plus, « longitudinal » et « transversal » désignent un positionnement parallèle et, respectivement perpendiculaire, à l'axe principal d'un véhicule.

Sur les différentes figures, des éléments ou parties d'éléments identiques portent une même référence. La description d'un élément représenté dans différentes figures est renvoyée au passage qui en traite.

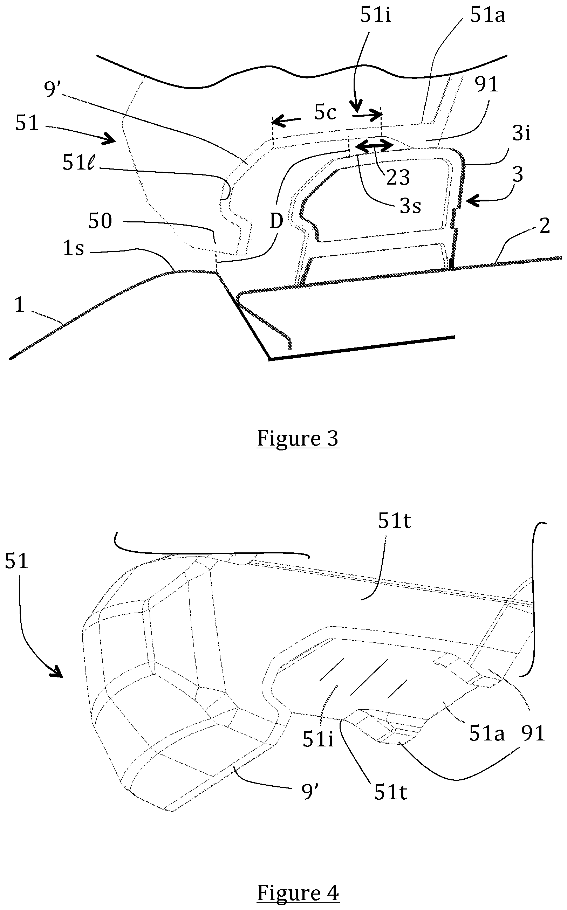

La figure 3 illustre une vue partielle en coupe de la position d'une mâchoire de serrage externe 51 lors de la pose / dépose (double flèche 23) d'une barre de portage (du type barre de portage 4 décrite précédemment, par rapport au rail d'accrochage 3 de la barre sur le toit de véhicule 2. Selon l'invention, la surface d'appui 51i de la mâchoire de serrage 51 sur la face supérieure 31 du rail 3 présente des protubérances 91 agencées en regard l'une de l'autre pour former un talon d'écartement entre cette surface d'appui 51i et la face supérieure 31.

Les protubérances 91 sont localisées en extrémité interne 51a de la surface d'appui 51i par rapport à la partie centrale 4a de la barre de portage (cf. figure 1), en dehors de la portion de contact 5c apte à venir serrer la surface d'appui 51i en contact avec la face supérieure 3s du rail 3. Ainsi, les protubérances 91 viendront se positionner au-delà de la face interne 3i du rail 3 en direction de la partie centrale de barre 4a (cf. figure 1) lors du serrage de la mâchoire externe 51 sur le rail 3, sans interférer avec le contact.

Dans ces conditions, lorsque la mâchoire de serrage externe 51 coopère avec une mâchoire de serrage interne, telle que la mâchoire interne 6 du dispositif de serrage / desserrage 8 de la figure 1, le talon d'écartement coopère avec la mâchoire interne 6 pour le serrage de la barre de portage 4 sur le rail d'accrochage 3.

Avantageusement, la surface d'appui 51i et la surface de prise latérale 51ℓ de la mâchoire de serrage externe 51 sont recouvertes d'une semelle 9' en matériau souple pour la mise en place de la mâchoire 51 lors du serrage. Cette semelle est constituée d'un élastomère, comme de l'EPDM (Ethylène-Propylène-Diène Monomère), de silicone ou équivalent. Dans cet exemple, la semelle 9' est d'épaisseur constante sauf à former les protubérances 91 qui viennent donc de moulage de cette semelle 9'.

Lors de la pose ou de la dépose de la barre de portage, les protubérances 91 glissent (double flèche 23) sur la face supérieure 3s du rail 3, maintenant alors la surface d'appui 51i à une distance « D », équivalente à la hauteur des protubérances 91, de ladite face supérieure 3s du rail 3. Cette distance « D » se retrouve alors sensiblement entre la partie supérieure 1s de l'arche de toit 1 de la partie inférieure 50 de la mâchoire 5.

La distance « D » est suffisante pour empêcher ainsi tout contact entre la partie supérieure d'arche 1s et la partie inférieure de mâchoire 50 et donc toute rayure sur l'arche de toit 1. Une valeur suffisante de la distance « D » est supérieure à une valeur seuil déterminée, par exemple 1 ou 2 centimètres, qui peut être aisément estimée compte tenus des mouvements habituellement mis en oeuvre lors de la pose ou de la dépose des barres de portage considérées.

La figure 4 montre plus précisément une vue en perspective de la surface d'appui 51i de la mâchoire de serrage 51 de la figure 3. Sur cette vue apparaissent, sur un côté d'extrémité interne de la surface d'appui 51i, les protubérances formées d'épaississements 91 de la semelle 9 et localisées, sur le côté d'extrémité interne 51a de la surface d'appui 51i recouverte de la semelle 9', dans la continuité des faces transversales 51t de la mâchoire 51 selon l'exemple illustré. Alternativement, les protubérances 91 sont prolongées de sorte à former un bourrelet le long du côté d'extrémité interne 51a.

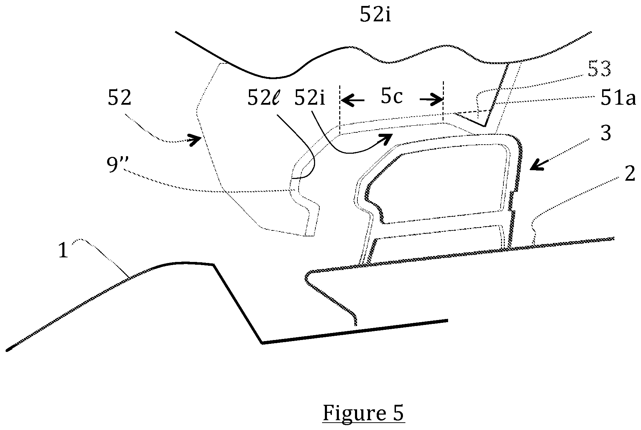

Un autre exemple de réalisation de l'invention est présenté sur la figure 5 avec une vue partielle en coupe d'une mâchoire 52, du même type que la mâchoire de serrage externe 51 (cf. figure 4) et du rail 3 correspondant. La mâchoire de serrage externe 52 présente également une semelle 9" recouvrant les surfaces d'appui 52i et de prise latérale 52ℓ. Dans cet exemple, un épaississement du matériau constitutif de la mâchoire de serrage externe 52 forme les protubérances 53 servant de talon d'écartement, hors de la portion de contact 5c de la mâchoire externe 52. Ces protubérances 53, localisées en extrémité interne 51a comme les protubérances précédentes 91, sont issues de moulage de la mâchoire de serrage externe 52. Dans ces conditions, la semelle 9" ne présente pas la surépaisseur de la semelle 9' précédemment décrite.

L'invention n'est pas limitée aux exemples de réalisation décrits et représentés. Ainsi, les protubérances ou le bourrelet agencé à l'extrémité interne de la surface d'appui peuvent venir de moulage ou être une pièce rapportée sur cette surface d'appui par tout moyen de solidarisation (fixation mécanique, soudage, collage ou équivalent).

## Revendications

1. Galerie sécurisée pour toit de véhicule automobile comportant au moins deux barres de portage (4) et au moins deux rails d'accrochage (3) aptes à être fixés longitudinalement sur le toit (2), chaque barre (4) possédant une partie centrale (4a) et deux extrémités (4e) et comporte, en ses extrémités (4e), un dispositif de solidarisation réversible par serrage / desserrage (8) de la barre (4) sur le rail correspondant (3) équipé d'une mâchoire (5, 51, 52) dite externe par rapport à la partie centrale de barre (4a), cette mâchoire externe (5, 51, 52) possédant au moins une portion (5c) de surface d'appui (5i, 51i) apte à venir en contact avec une face supérieure (3s) du rail correspondant (3), ladite galerie comportant un moyen d'écartement (91, 53) qui est agencé entre la surface d'appui (51i) de la mâchoire externe (51, 52) et la face supérieure (3s) du rail correspondant (3), et qui établit une distance (D) supérieure à un seuil déterminée entre la portion de contact (51c) de la mâchoire (51, 52) et la face supérieure (3s) du rail (3) avant serrage et après desserrage de la barre (4), de sorte que ladite mâchoire (51, 52) reste sans contact par rapport au toit (2), **caractérisée en ce que** le moyen d'écartement est constitué d'un talon d'écartement (91, 53) venant de la surface d'appui (51i) de la mâchoire externe (51, 52) et localisée en extrémité interne (51a) de ladite surface d'appui (51i) par rapport à la partie centrale (4a) de la barre de portage (4), hors de la portion de contact (5c) de cette surface d'appui (51i).

2. Galerie sécurisée selon la revendication précédente, dans laquelle le talon d'écartement comporte au moins deux protubérances (91, 53) agencées en regard l'une de l'autre à l'extrémité interne (51a) de la surface d'appui (51i).

3. Galerie sécurisée selon l'une quelconque des revendications 1 et 2, dans laquelle le talon d'écartement forme un bourrelet agencé le long d'une extrémité interne (51a) de la surface d'appui (51i).

4. Galerie sécurisée selon l'une quelconque des revendications 2 à 3, dans laquelle le talon d'écartement est formé par au moins un épaississement (53) du matériau constituant la mâchoire externe (52).

5. Galerie sécurisée selon l'une quelconque des revendications 2 à 3, dans laquelle, la surface d'appui (51i) étant recouverte d'une semelle de protection (9', 9"), le talon d'écartement est formé d'au moins un épaississement (91) de cette semelle (9', 9").

6. Galerie sécurisée selon l'une quelconque des revendications 2 à 5, dans laquelle, le dispositif de serrage / desserrage (8) possédant également une mâchoire de serrage interne (6) par rapport à la partie centrale (4a) de la barre de portage (4), le talon d'écartement (91, 53) coopère avec la mâchoire interne (6) pour le serrage de la barre de portage (4) sur le rail d'accrochage correspondant (3).

7. Véhicule automobile comportant un toit (2) équipé d'une galerie sécurisée à barres de portage (4) et rails d'accrochage (3) fixés au toit (2) selon l'une quelconque des revendications précédentes.

## Patentansprüche

1. Dachträger für Kraftfahrzeugdach, der mindestens zwei Tragstangen (4) und mindestens zwei Anhängschienen (3) umfasst, die geeignet sind, längs auf dem Dach (2) befestigt zu sein, wobei jede Stange (4) einen zentralen Teil (4a) und zwei Enden (4e) besitzt und an ihren Enden (4e) eine umkehrbare Vorrichtung zum festen Verbinden durch Spannen/Lockern (8) der Stange (4) auf der entsprechenden Schiene (3) umfasst, die mit einer Backe (5, 51, 52) ausgestattet ist, die bezüglich des zentralen Teils der Stange (4a) extern genannt wird, wobei diese externe Backe (5, 51, 52) mindestens einen Abschnitt (5c) einer Auflageoberfläche (5i, 51i) besitzt, der geeignet ist, mit einer oberen Fläche (3s) der entsprechenden Schiene (3) in Berührung zu kommen, wobei der Dachträger ein Abspreizmittel (91, 53) umfasst, das zwischen der Auflageoberfläche (51i) der externen Backe (51, 52) und der oberen Fläche (3s) und der entsprechenden Schiene (3) eingerichtet ist und einen Abstand (D), der größer ist als ein bestimmter Schwellenwert, zwischen dem Berührungsabschnitt (51c) der Backe (51, 52) und der oberen Fläche (3s) der Schiene (3) vor dem Spannen und nach dem Lockern der Stange (4) derart einrichtet, dass die Backe (51, 52) bezüglich des Dachs (2) ohne Berührung bleibt, **dadurch gekennzeichnet, dass** das Abspreizmittel aus einem Abspreizabsatz (91, 53) besteht, der von der Auflageoberfläche (51i) der externen Backe (51, 52) kommt und am internen Ende (51a) der Auflageoberfläche (51i) bezüglich des zentralen Teils (4a) der Tragstange (4) außerhalb des Berührungsabschnitts (5c) dieser Auflageoberfläche (51i) liegt.

2. Dachträger nach dem vorstehenden Anspruch, wobei der Abspreizabsatz mindestens zwei Vorsprünge (91, 53) umfasst, die einander gegenüber an dem internen Ende (51a) der Auflageoberfläche (51i) eingerichtet sind.

3. Dachträger nach einem der Ansprüche 1 und 2, wobei der Abspreizabsatz einen Wulst bildet, der entlang eines internen Endes (51a) der Auflageoberfläche (51i) eingerichtet ist.

4. Dachträger nach einem der Ansprüche 2 bis 3, wobei der Abspreizabsatz durch mindestens eine Verdickung (53) des Werkstoffs, der die externe Backe (52) bildet, gebildet ist.

5. Dachträger nach einem der Ansprüche 2 bis 3, wobei, da die Auflageoberfläche (51i) mit einer Schutzsohle (9', 9") abgedeckt ist, der Abspreizabsatz aus mindestens einer Verdickung (91) dieser Sohle (9', 9") gebildet ist.

6. Dachträger nach einem der Ansprüche 2 bis 5, wobei, da die Spann-/Lockerungsvorrichtung (8) auch eine interne Spannbacke (6) bezüglich dem zentralen Teil (4a) der Tragstange (4) besitzt, der Abspreizabsatz (91, 53) mit der internen Backe (6) für das Spannen der Tragstange (4) auf der entsprechenden Anhängschiene (3) zusammenwirkt.

7. Kraftfahrzeug, das ein Dach (2) umfasst, das mit einem Dachträger mit Tragstange (4) und Anhängschienen (3), die an dem Dach (2) befestigt sind, nach einem der vorstehenden Ansprüche ausgestattet ist.

## Claims

1. A secure roof rack for a motor vehicle roof comprising at least two carrying bars (4) and at least two fastening rails (3) able to be fixed longitudinally on the roof (2), each bar (4) having a central part (4a) and two ends (4e) and comprises, at its ends (4e), a device for reversible securing by clamping/unclamping (8) of the bar (4) on the corresponding rail (3) equipped with a jaw (5, 51, 52), designated as external with respect to the central part of the bar (4a), this external jaw (5, 51, 52) having at least one portion (5c) of support surface (5i, 51i) able to come in contact with an upper face (3s) of the corresponding rail (3), said roof rack comprising a spacing means (91, 53) which is arranged between the support surface (51i) of the external jaw (51, 52) and the upper face (3s) of the corresponding rail (3), and which establishes a distance (D) greater than a specified threshold of the contact portion (51c) of the jaw (51, 52) and the upper face (3s) of the rail (3) before clamping and after unclamping of the bar (4), such that said jaw (51, 52) remains without contact with respect to the roof (2), **characterized in that** the spacing means is constituted by a spacing bead (91, 53) coming from the support surface (51i) of the external jaw (51, 52) and located at the internal end (51a) of said support surface (51i) with respect to the central part (4a) of the carrying bar (4), beyond the contact portion (5c) of this support surface (51i).

2. The secure roof rack according to the preceding claim, in which the spacing bead comprises at least two protuberances (91, 53) arranged facing one another at the internal end (51a) of the support surface (51i).

3. The secure roof rack according to any one of Claims 1 and 2, in which the spacing bead forms a bulge arranged along an internal end (51a) of the support surface (51i).

4. The secure roof rack according to any one of Claims 2 to 3, in which the spacing bead is formed by at least one thickening (53) of the material constituting the external jaw (52).

5. The secure roof rack according to any one of Claims 2 to 3, in which, the support surface (51i) being covered by a protective base (9', 9"), the spacing bead is formed by at least one thickening (91) of this base (9', 9").

6. The secure roof rack according to any one of Claims 2 to 5, in which, the clamping/unclamping device (8) also having an internal clamping jaw (6) with respect to the central part (4a) of the carrying bar (4), the spacing bead (91, 53) cooperates with the internal jaw (6) for clamping the carrying bar (4) on the corresponding fastening rail (3).

7. A motor vehicle comprising a roof (2) equipped with a secure roof rack with carrying bars (4) and fastening rails (3) fixed to the roof (2) according to any one of the preceding claims.
